# EUROPÄISCHE PATENTSCHRIFT

(11) **EP 0 810 398 B1**
(45) Veröffentlichungstag und Bekanntmachung des Hinweises auf die Patenterteilung: **18.07.2001**
(21) Anmeldenummer: 97106395.3
(22) Anmeldetag: 17.04.1997
(51) Int. Cl.: F16K 31/02, F16K 31/00

(54) **Elektrisch ansteuerbares Schieberventil**
Electric actuated gate valve
Robinets-vannes électriques

(30) Priorität: 30.05.1996 DE 19621796
(43) Veröffentlichungstag der Anmeldung: 03.12.1997
(73) Patentinhaber: Nass Magnet GmbH, 30179 Hannover (DE)
(72) Erfinder: Hiddessen, Ralf, 31275 lehrte (DE); Ossenbrügge, Jan-Peter, 30853 Langenhagen (DE); Grove, Horst, 30851 Langenhagen (DE); Rieck, Franz, 31303 Burgdorf (DE)
(74) Vertreter: Tetzner, Volkmar, Dr.-Ing. Dr. jur.

(56) Entgegenhaltungen:
- EP-A- 0 165 407
- EP-A- 0 400 482
- EP-A- 0 491 652
- EP-A- 0 710 790
- DE-A- 2 141 013
- DE-A- 4 103 665
- DE-U- 29 514 495
- US-A- 4 678 000
- US-A- 5 271 226

## Beschreibung

Die Erfindung betrifft ein Ventil gemäß dem Oberbegriff des Anspruches 1.

Aus der Praxis sind Ventile für die verschiedensten Einsatzzwecke bekannt. Sie weisen wenigstens zwei Anschlüsse und einen zwischen wenigstens zwei Schaltstellungen hin- und herbeweglichen Schieber auf, wobei der Schieber in einer Schaltstellung wenigstens einen Anschluß abdichtet und ihn in der anderen Schaltstellung freigibt. Es sind ferner Stellmittel zur Ausübung der Stellfunktion und Dichtmittel zur Ausübung der Dichtfunktion des Schiebers vorgesehen.

Aus der US 4 678 000 ist ein elektromagnetisches Einspritzventil für Kraftstoffe bekannt, wobei ein Schieber in einer Schaltstellung die Verbindung zwischen zwei Anschlüssen freigibt und sie in der anderen Schaltstellung verschließt. Durch Ansteuerung einer elektromagnetischen Betätigungseinrichtung wird der Schieber in die Schließstellung gebracht, wobei dessen vorderes Ende mit einem entsprechenden Dichtsitz in Kontakt kommt. Die elektromagnetische Betätigungseinrichtung erzeugt somit zum einen die Stellkraft und zum anderen die Dichtkraft auf den Schieber. In der Schließstellung wird der Schieber mittels eines Piezo-Elements festgeklemmt. Die elektromagnetische Betätigungseinrichtung ist bei diesem bekannten Ventil verhältnismäßig groß ausgebildet, da sie zum einen einen verhältnismäßig großen Stellweg des Schiebers und zum anderen eine verhältnismäßig große Dichtkraft in der Schließstellung aufbringen muß.

Aus der EP-A-0 710 790 ist ein Magnetventil bekannt, bei dem ein Ankerstößel, an dessen Stirnseite ein Dichtelement vorgesehen ist, mittels einer Erregerspule verschiebbar ist. Das Dichtelement wird mittels einer Feder gegen einen Dichtsitz gedrückt. Zur Aufhebung der Federkraft ist darüber hinaus eine zweite, unabhängig von der Erregerspule bestrombare Spule vorgesehen, die bei einer vorgegebenen Bestromung die gegen den Ventilsitz drückende Kraft der Feder aufhebt.

Der Erfindung liegt die Aufgabe zugrunde, das Ventil dahingehend weiterzuentwickeln, daß es wirkungsvoller und zuverlässiger schaltbar ist.

Erfindungsgemäß wird diese Aufgabe durch die Merkmale des Anspruches 1 gelöst.

Weitere Ausgestaltungen der Erfindung sind Gegenstand der Unteransprüche und werden im folgenden anhand der Beschreibung einiger Ausführungsbeispiele und der Zeichnung näher erläutert.

In der Zeichnung zeigen
- Fig.1: eine schematische Darstellung eines ersten Ausführungsbeispieles,
- Fig.2: eine schematische Darstellung eines zweiten Ausführungsbeispieles,
- Fig.3: eine schematische Darstellung eines dritten Ausführungsbeispieles,
- Fig. 4: eine schematische Darstellung eines vierten Ausführungsbeispieles,
- Fig.5a bis 5c: Ansteuerkennlinien des Ventils gemäß einer ersten Steuerung und
- Fig.6a bis 6c: Ansteuerkennlinien gemäß einer zweiten Steuerung.

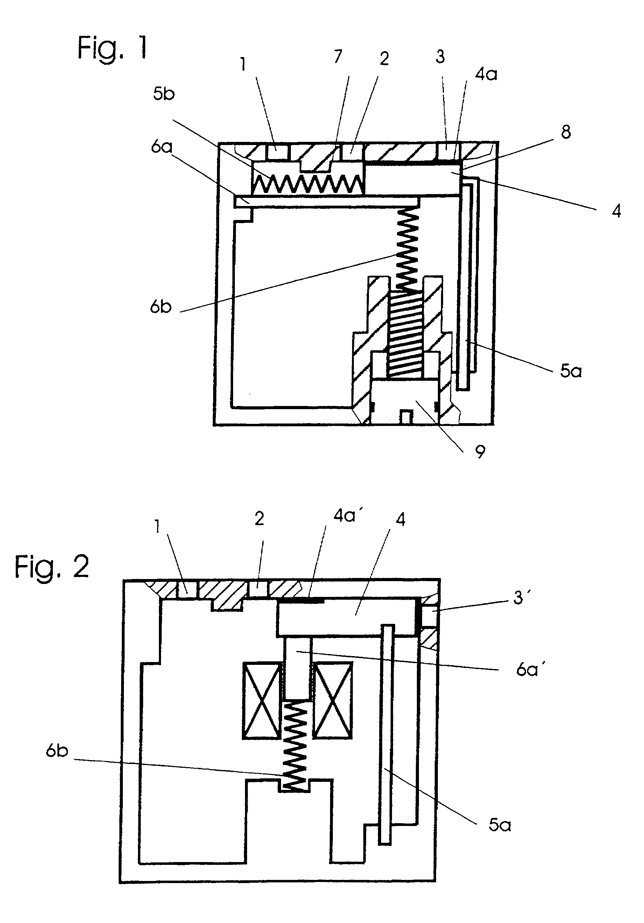

In Fig.1 ist ein 3/2-Wegeventil mit einem Geräteanschluß 1, einem Druckanschluß 2 und einem Abluftanschluß 3 dargestellt. Ein Schieber 4 ist zwischen zwei Schaltstellungen hin- und herbeweglich angeordnet, wobei der Schieber in der dargestellten Schaltstellung den Abluftanschluß 3 verschließt und die Verbindung zwischen Geräteanschluß 1 und Druckanschluß 2 herstellt und in der anderen Schaltstellung den Abluftanschluß 3 freigibt und auf diese Weise eine Verbindung zwischen Geräteanschluß 1 und Abluftanschluß 3 bereitstellt.

Mit dem Schieber 4 sind ferner Stellmittel zur Ausübung der Stellfunktion verbunden, die durch einen Stellaktor 5a und ein elastisches Element, insbesondere ein erstes Federelement 5b gebildet werden. Zur Ausübung der Dichtfunktion sind Dichtmittel vorgesehen, die einen Dichtaktor 6a und ein zweites Federelement 6b umfassen. Im dargestellten Ausführungsbeispiel werden sowohl der Stellaktor 5a als auch der Dichtaktor 6a durch eine einseitig eingespannte piezoelektrische Biegzunge gebildet.

Durch entsprechende Spannungsbeaufschlagung wird der Stellaktor 5a so angeregt, daß er den Schieber 4 entgegen der Kraft des Federelementes 5b nach links verschiebt. Gleichzeitig wird der Dichtaktor 6a derart angeregt, daß er die durch das zweite Federelement 6b auf den Schieber ausgeübte Dichtkraft aufhebt. Die Rückstellung des Dichtaktors 6a und damit die Ausübung der Dichtkraft erfolgt nach Verstellung des Schiebers 4 durch das zweite Federelement 6b. Die beiden Aktoren 5a, 6a müssen nach der Verstellung des Schiebers 4 keine weiteren Kräfte auf den Schieber übertragen. Dies hat den großen Vorteil, daß bei den durch die Biegezungen gebildeten Aktoren kein sogenanntes "Kriechen" auftreten kann. Dieses Kriechen kann insbesondere dann auftreten, wenn eine Biegezunge für eine längere Zeit ausgelenkt werden muß, da es dann möglicherweise zu einem Abgleiten der Klebeschicht im Aktor kommt.

Die beiden Endstellungen des Schiebers 4 werden zweckmäßigerweise durch zwei Anschläge 7, 8 begrenzt.

Im Gegensatz zum Stellaktor 5a benötigt der Dichtaktor 6a lediglich einen kurzen Stellweg. Um etwaige Fertigungstoleranzen ausgleichen zu können, wird die Federkraft des zweiten Federelementes 6b durch eine Justierschraube 9 eingestellt.

Der Schieber 4 weist eine mit einem entsprechenden Anschluß in Wirkverbindung kommende Dichtung 4a, insbesondere eine elastische Beschichtung auf, die an einer quer zur Bewegungsrichtung des Schiebers angeordneten Seitenfläche desselben vorgesehen ist.

Das in Fig.2 dargestellte zweite Ausführungsbeispiel stellt wiederum ein 3/2-Wegeventil dar, wobei jedoch der Abluftanschluß 3' quer zum Geräteanschluß 1 und zum Druckanschluß 2 auf einer anderen Seite des Ventils angeordnet ist. Der Schieber 4 ist wiederum durch einen Stellaktor 5a zwischen zwei Stellungen hin- und herbeweglich. Die Dichtmittel werden durch ein zweites Federelement 6b und einen Dichtaktor 6'a gebildet, wobei der Dichtaktor 6'a als elektromagnetisch betätigbarer Anker vorgesehen ist.

Zur Verstellung des Schiebers 4 wird somit zunächst der Dichtaktor 6'a betätigt, um die Federkraft des zweiten Federelementes 6b aufzuheben, so daß alsdann der Stellaktor 5a angesteuert werden kann. Der Stellaktor 5a wird im dargestellten Ausführungsbeispiel wiederum durch eine einseitig eingespannte piezoelektrische Biegezunge gebildet, wobei die Rückstellung des Schiebers 4 durch die im Stellaktor 5a vorhandene Federkraft erreicht wird. Bei dieser Ausführung kann es jedoch möglicherweise zum Auftreten des oben beschriebenen "Kriechens" kommen.

Der Abluftanschluß 3' ist im dargestellten Ausführungsbeispiel senkrecht zum Geräteanschluß 1 und zum Druckanschluß 2 angeordent. Dies hat den Vorteil, daß der Systemdruck, der den Schieber von innen auf den Abluftanschluß 3' drückt, nur dann wirkt, wenn der Schieber 4 noch nicht verschoben wurde. Schon bei einem leichten Abheben des Schiebers vom Abluftanschluß 3' fällt der Druck und damit die Kraft auf den Stellaktor 5a. Dieser Kraftverlauf kommt dem als piezoelektrische Biegezunge ausgebildeten Stellaktor 5a entgegen, der bei minimaler Auslenkung die größte Kraft erreichen kann.

Das Ausführungsbeispiel gemäß Fig.1 hat gegenüber dem der Fig.2 den Nachteil, daß sich die Druckkraft auf den Abluftanschluß 3 als Normalkraft auf die Reibkraft des Schiebers 4 auswirkt und dies noch dazu auf einem längeren Weg.

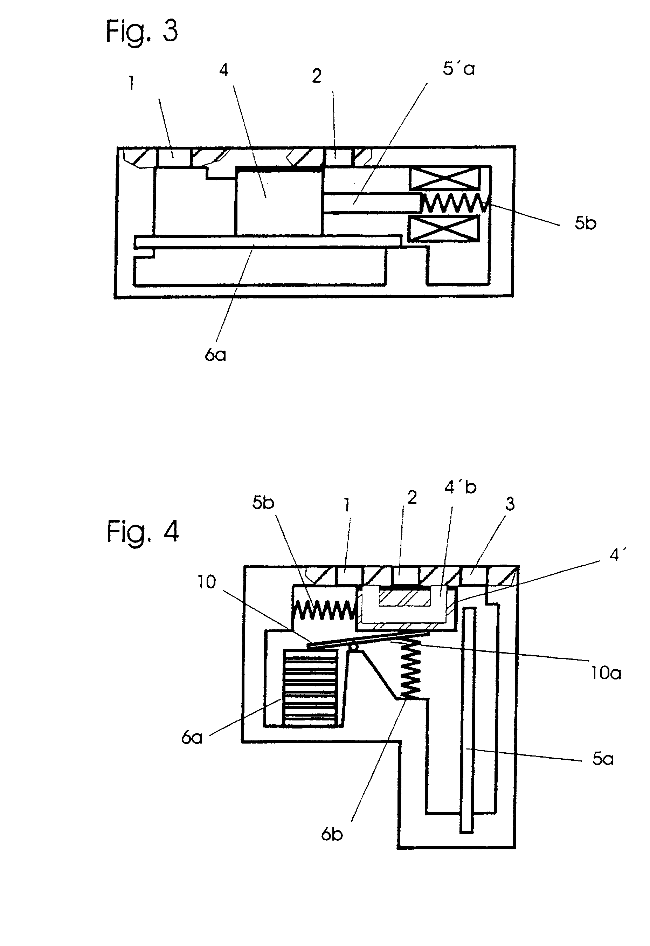

Das in Fig.3 dargestellte dritte Ausführungsbeispiel zeigt ein 2/2-Wegeventil, bei dem lediglich ein Geräteanschluß 1 und ein Druckanschluß 2 vorgesehen ist, wobei der Schieber 4 in einer Schaltstellung den Druckanschluß 2 freigibt und ihn in der anderen Schaltstellung verschließt.

Die Stellbewegung des Schiebers 4 wird hier durch einen elektromagnetischen Stellaktor 5'a erreicht, der wiederum mit einem ersten Federelement 5b zusammenwirkt.

Die Dichtkraft wird durch einen piezoelektrischen Biegestreifen 6a erzeugt, der zur Erhöhung seiner Stellkraft beidseitig aufgelegt ist. Im dargestellten Ausführungsbeispiel arbeitet der Dichtaktor 6a ohne ein zusätzliches Federelement gegen den Schieber 4. Die notwendige Federkraft kann dann beispielsweise durch Vorspannung des Dichtaktors erzeugt werden.

Das in Fig.4 dargestellte vierte Ausführungsbeispiel entspricht von seinen äußeren Anschlüssen wieder dem in Fig.1 dargestellten 3/2-Vegeventil. Die Stellmittel werden durch einen als piezoelektrische Biegezunge ausgebildeten Stellaktor 5a und ein erstes Federelement 5b gebildet. Die Dichtkraft wird durch ein Federelement 6b erzeugt, während die Aufhebung dieser Dichtkraft über einen als Stapelpiezo ausgebildeten Dichtaktor 6a bewirkt wird. Zur Vergrößerung der Auslenkung des Dichtaktors 6a wird ein Hebel 10 eingesetzt.

Der dargestellte Schieber 4' weist eine Bohrung 4'b auf, über die das Medium im offenen Zustand geführt wird, d.h. wenn der Geräteanschluß 1 mit dem Druckanschluß 2 verbunden ist. Der besondere Vorteil bei dieser Ausbildung des Schiebers 4 besteht darin, daß sich geringe druckgefüllte Volumina im Ventil ergeben, so daß die benötigte Zeit zum Druckaufbau gering ist.

Im Rahmen der Erfindung sind die in den einzelnen Ausführungsbeispielen dargestellten Elemente untereinander austauschbar. Die Besonderheit bei allen Ausführungsbeispielen besteht darin, daß die Funktion "Stellen" und die Funktion "Dichten" durch zwei voneinander getrennte Aktoren durchgeführt wird. Während der Stellaktor einen möglichst großen Stellweg und der Dichtaktor eine möglichst große Dichtkraft benötigt, kann so jeder Aktor für seine Funktion optimal ausgelegt werden. Indem der Stellaktor und der Dichtaktor in unterschiedlichen Richtungen auf den Schieber 4, 4' wirken, können die Funktionen auch sauber voneinander getrennt werden. In einigen Fällen übt der Dichtaktor neben der Funktion des Dichtens auch eine Klemmfunktion des Schiebers aus.

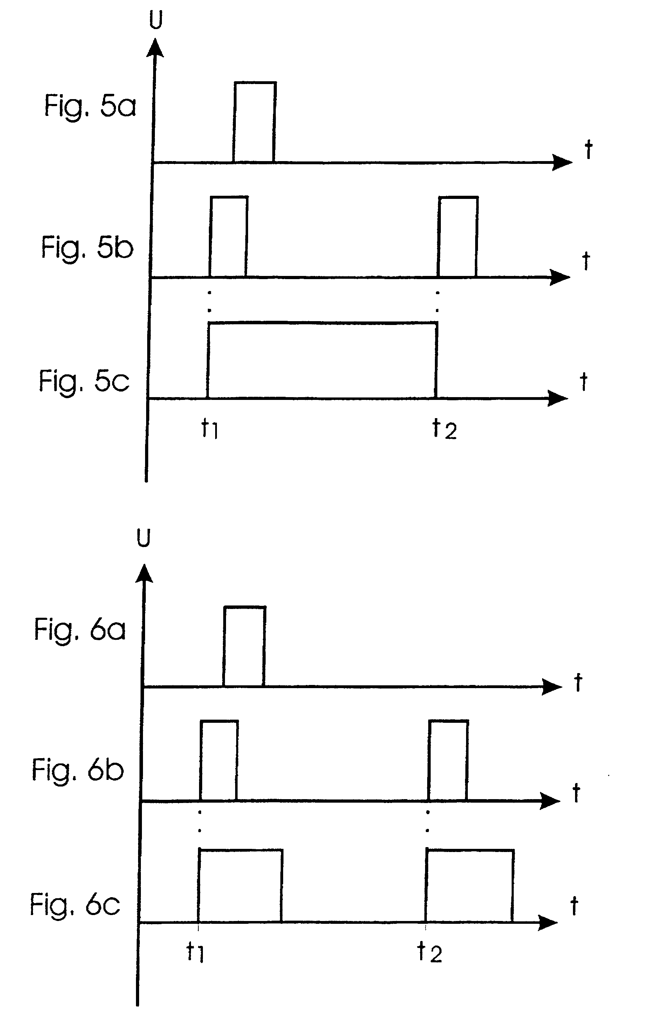

In den Fig.5a bis 5c sind drei Kurvenverläufe dargestellt, wobei in Fig.5c die Ansteuerung des gesamten Ventils von außen gesehen dargestellt ist. Fig.5a zeigt die Ansteuerung des Stellaktors und 5b die Ansteuerung des Dichtaktors. In allen drei Fällen ist die Ansteuerspannung U gegenüber der Zeit t dargestellt. Um das Ventil während einer Zeitspanne von t₁ bis t₂ zu öffnen, wird zunächst zum Zeitpunkt t₁ der Dichtaktor geschaltet. Der Stellaktor wird gleichzeitig bzw. etwas zeitversetzt aktiviert.

Aufgrund der selbständigen Rückführung des Schiebers bei Aufhebung der Dichtkraft ist zum Schließen des Ventils zum Zeitpunkt t₂ lediglich die Ansteuerung des Dichtaktors erforderlich.

Bei der in den Fig.6a bis 6c dargestellten bistabilen Ansteuerung des Ventils wird jeweils durch einen elektrischen Impuls zwischen der Stellung "offen" und "geschlossen" gewechselt. Um bei einem Impuls in den jeweils anderen Ventilzustand zu wechseln, muß die jeweils letzte Stellung des Ventils (offen oder geschlossen) in einem Speicher zwischengespeichert sein. Bei einem eintreffenden Signal werden die Aktoren abhängig vom Speicherinhalt zum Öffnen des Ventils beide betätigt oder zum Schließen nur der Dichtaktor geschaltet.

## Patentansprüche

1. Ventil mit
- wenigstens zwei Anschlüssen (1, 2, 3; 3'),
- einem zwischen wenigstens zwei Schaltstellungen hin- und herbeweglichen Schieber (4; 4'), wobei der Schieber in einer Schaltstellung wenigstens einen Anschluß abdichtet und ihn in der anderen Schaltstellung freigibt,
- und Stellmitteln (5a, 5b; 5'a) zur Ausübung der Stellfunktion und Dichtmitteln (6a, 6b; 6'a) zur Ausübung der Dichtfunktion des Schiebers, wobei die Stellmittel einen Stellaktor (5a, 5'a) und die Dichtmittel einen Dichtaktor (6a, 6'a) aufweisen,dadurch gekennzeichnet, daß die Stell- und Dichtmittel getrennt voneinander elektrisch ansteuerbar sind, wobei
der Stellaktor und der Dichtaktor in unterschiedlichen Richtungen auf den Schieber (4, 4') wirken.

2. Ventil nach Anspruch 1, dadurch gekennzeichnet, daß wengistens einer der beiden Aktoren mit einem entgegenwirkenden, elastischen Element (5b, 6b), insbesondere einem Federelement, zusammenwirkt.

3. Ventil nach Anspruch 1, dadurch gekennzeichnet, daß die Dichtmittel zur Erzeugung der Dichtkraft ein elastisches Element (6b) aufweisen und der Dichtator (6a, 6'a) zur Aufhebung der Dichtkraft dem elastischen Element entgegenwirkt.

4. Ventil nach Anspruch 1, dadurch gekennzeichnet, daß der Stellaktor (5a, 5'a) einen vergleichsweise großen Stellweg und eine vergleichsweise geringe Stellkraft und der Dichtaktor (6a, 6'a) einen vergleichsweise kleinen Stellweg und eine vergleichsweise große Stellkraft aufweist.

5. Ventil nach Anspruch 1, dadurch gekennzeichnet, daß wenigstens einer der beiden Aktoren (5'a, 6'a) durch ein elektro-magnetisches Bauelement gebildet wird.

6. Ventil nach Anspruch 1, dadurch gekennzeichnet, daß wenigstens einer der beiden Aktoren (5a, 6a) durch ein piezoelektrisches Bauelement gebildet wird.

7. Ventil nach Anspruch 1, dadurch gekennzeichnet, daß wenigstens einer der beiden Aktoren (5a, 5'a) durch einen piezoelektrischen Biegestreifen gebildet wird.

8. Ventil nach Anspruch 1, dadurch gekennzeichnet, daß wengistens einer der beiden Aktoren durch einen zweiseitig eingespannten piezoelektrischen Biegestreifen gebildet wird.

9. Ventil nach Anspruch 1, dadurch gekennzeichnet, daß wenigstens einer der Aktoren durch einen Stapelpiezo gebildet wird.

10. Ventil nach Anspruch 9, dadurch gekennzeichnet, daß der Stapelpiezo über einen Hebel (10) mit dem Schieber (4') gekoppelt ist.

11. Ventil nach Anspruch 1, dadurch gekennzeichnet, daß die Wirkrichtung der Stellmittel (5a, 5b; 5'a) im wesentlichen senkrecht zur Wirkrichtung der Dichtmittel (6a, 6b; 6'a) verläuft.

12. Ventil nach Anspruch 1, dadurch gekennzeichnet, daß der Schieber (4, 4') eine mit einem Anschluß (1, 2, 3, 3') in Wirkverbindung kommende Dichtung (4a) aufweist, die an einer quer zur Bewegungsrichtung des Schiebers angeordneten Seitenfläche des Schiebers vorgesehen ist.

13. Ventil nach Anspruch 1, dadurch gekennzeichnet, daß Klemmittel vorgesehen sind, die den Schieber in seiner momentanen Stellung festhalten oder freigeben.

14. Ventil nach Anspruch 13, dadurch gekennzeichnet, daß die Funktion der Klemmittel durch die Dichtmittel wahrgenommen wird.

15. Ventil nach Anspruch 1, dadurch gekennzeichnet, daß das Ventil durch ein Wegeventil gebildet wird.

## Claims

1. Valve with
- at least two connections (1, 2, 3; 3'),
- a slide (4; 4') which is movable to and fro between at least two setting positions, wherein the slide seals at least one connection in one setting position and opens it in the other setting position,
- and positioning means (5a, 5b; 5'a) to perform the positioning function and sealing means (6a, 6b; 6'a) to perform the sealing function of the slide, wherein the positioning means have a positioning actuator (5a, 5'a) and the sealing means have a sealing actuator (6a, 6'a), characterised in that the setting and sealing means can be controlled separately from one another, the positioning actuator and the sealing actuator acting in different directions on the slide (4, 4').

2. Valve as claimed in Claim 1, characterised in that at least one of the two actuators co-operates with a counteracting resilient element (5b, 6b), particularly a spring element

3. Valve as claimed in Claim 1, characterised in that the sealing means for producing the sealing force have a resilient element (6b) and the sealing actuator (6a, 6'a) counteracts the elastic element in order to neutralise the sealing force.

4. Valve as claimed in Claim 1, characterised in that the positioning actuator (5a, 5'a) has a comparatively great adjustment path and a comparatively small adjusting force and the sealing actuator (6a, 6'a) has a comparatively small adjustment path and comparatively great adjusting force.

5. Valve as claimed in Claim 1, characterised in that at least one of the two actuators (5'a, 5'a) is formed by an electromagnetic component.

6. Valve as claimed in Claim 1, characterised in that at least one of the two actuators (5a, 6a) is formed by a piezoelectric component.

7. Valve as claimed in Claim 1, characterised in that at least one of the two actuators (5a, 5'a) is formed by a piezoelectric bending strip.

8. Valve as claimed in Claim 1, characterised in that at least one of the two actuators is formed by a piezoelectric bending strip clamped on both sides.

9. Valve as claimed in Claim 1, characterised in that at least one of the actuators is formed by a stack piezo.

10. Valve as claimed in Claim 9, characterised in that the stack piezo is coupled to the slide (4') by way of a lever (10).

11. Valve as claimed in Claim 1, characterised in that the direction of operation of the positioning means (5a, 5b; 5'a) extends substantially perpendicular to the direction of operation of the sealing means (6a, 6b; 6'a).

12. Valve as claimed in Claim 1, characterised in that the slide (4, 4') has a seal (4a) which comes into operative connection with a connection (1, 2, 3, 3') and which is provided on a lateral surface of the slide disposed transversely with respect to the direction of movement of the slide.

13. Valve as claimed in Claim 1, characterised in that clamping means are provided which hold the slide in its current position or release it.

14. Valve as claimed in Claim 13, characterised in that the function of the clamping means is undertaken by the sealing means.

15. Valve as claimed in Claim 1, characterised in that the valve is formed by a multi-way valve.

## Revendications

1. Soupape comportant
- au moins deux raccords (1,2,3;3'),
- un tiroir (4;4') déplaçable en va-et-vient entre au moins deux positions de commutation, le tiroir fermant de façon étanche au moins un raccord, dans une position de commutation, et libérant ce raccord dans l'autre position de commutation, et
- des moyens de réglage (5a,5b;5'a) pour mettre en oeuvre la fonction de réglage et des moyens d'étanchéité (6a,6b;6'a) pour mettre en oeuvre la fonction d'étanchéité du tiroir, les moyens de réglage possédant un actionneur de réglage (5a,5'a) et les moyens d'étanchéité possédant un actionneur d'étanchéité (6a,6'a),
caractérisée en ce que les moyens de réglage et les moyens d'étanchéité peuvent être commandés électriquement séparément les uns des autres, l'actionneur de réglage et l'actionneur d'étanchéité agissant sur le tiroir (4,4') dans des directions différentes.

2. Soupape selon la revendication 1, caractérisée en ce qu'au moins l'un des deux actionneurs coopère avec un élément élastique (5b,6b), qui agit en sens opposé, notamment un élément de ressort.

3. Soupape selon la revendication 1, caractérisée en ce que les moyens d'étanchéité comporte, pour la production de la force d'étanchéité, un élément élastique (6b) et l'actionneur d'étanchéité (6a,6'a) agit en sens opposé de l'élément élastique, pour supprimer la force d'étanchéité.

4. Soupape selon la revendication 1, caractérisée en ce que l'actionneur de réglage (5a,5'a) possède une course de réglage comparativement longue et une force de réglage comparativement faible et l'actionneur d'étanchéité (6a,6'a) possède une course de réglage comparativement faible et une force de réglage comparativement intense.

5. Soupape selon la revendication 1, caractérisée en ce qu'au moins l'un des deux actionneurs (5'a,6'a) est formé par un composant électromagnétique.

6. Soupape selon la revendication 1, caractérisée en ce qu'au moins l'un des deux actionneurs (5a,6a) est formé par un composant piézoélectrique.

7. Soupape selon la revendication 1, caractérisée en ce que l'un des deux actionneurs (5a,5'a) est formé par une bande piézoélectrique flexible.

8. Soupape selon la revendication 1, caractérisée en ce qu'au moins l'un des deux actionneurs est formé par une bande piézoélectrique flexible, serrée sur deux côtés.

9. Soupape selon la revendication 1, caractérisée en ce qu'au moins l'un des actionneurs est formé par un élément piézoélectrique à empilage.

10. Soupape selon la revendication 9, caractérisée en ce que l'élément piézoélectrique à empilage est couplé au tiroir (4') par l'intermédiaire d'un levier (10).

11. Soupape selon la revendication 1, caractérisée en ce que la direction d'action des moyens de réglage (5a,5b;5'a) est essentiellement perpendiculaire à la direction d'action des moyens d'étanchéité (6a,6b;6'a).

12. Soupape selon la revendication 1, caractérisée en ce que le tiroir (4,4') possède une garniture d'étanchéité (4a), qui coopère avec un raccord (1,2,3,3') et qui est prévu sur une surface latérale du tiroir, qui est disposée transversalement par rapport à la direction de déplacement du tiroir.

13. Soupape selon la revendication 1, caractérisée en ce que des moyens de serrage sont prévus, qui bloquent ou libèrent le tiroir dans sa position instantanée.

14. Soupape selon la revendication 13, caractérisée en ce que la fonction des moyens de serrage est assumée par les moyens d'étanchéité.

15. Soupape selon la revendication 1, caractérisée en ce que la soupape est constituée par une soupape formant distributeur.
